# EUROPEAN PATENT SPECIFICATION

(11) **EP 0 606 834 B1**
(45) Date of publication and mention of the grant of the patent: **26.03.1997**
(21) Application number: 94100006.9
(22) Date of filing: 03.01.1994
(51) Int. Cl.: A01B 73/02, A01B 23/04

(54) **Device relating to a towable tractor tool**
Einrichtung an einem schleppergezogenen Werkzeug
Dispositif en relation avec un outil remorque par un tracteur

(30) Priority: 13.01.1993 SE 9300065
(43) Date of publication of application: 20.07.1994
(73) Proprietor: KVERNELAND KLEPP AS, N-4344 Kvernaland (NO)
(72) Inventor: Skjaeveland, Magne, N-4062 Klepp St. (NO)
(74) Representative: Hynell, Magnus

(56) References cited:
- FR-A- 2 094 128
- US-A- 3 759 332
- US-A- 3 830 313

## Description

The invention concerns a device relating to a tool of the type which can be towed by a tractor.

Tools of the type which can be towed by tractors usually rest on the ground through ground engaging wheels or possibly runners or the like. The working depth can be set by adjusting ground engaging wheels, and the tool normally also can be prepared for transport by such adjustment. Tractor towed tools, which have a large working width, also should be foldable for the road transportation. Adjustment of working depth and change between working position and transport position is, as far as tools of the type which is known per se is concerned, carried out therein that the ground engaging wheel is raised or lowered in relation to the tool frame by means of a hydraulic actuator, which is coupled to the hydraulic system of the tractor. The actuator is powered via an operating valve having a closed centre position, wherein the actuator can be set in any optional position. The adjustment of the working depth therefore is an easy operation. Larger tools, which have to be folded prior to transportation on a road, moreover are divided in sections which are connected to each other through articulated joints and are connected to the tool frame via hinges. The side sections of the tool are turned or folded up to a more or less vertical position before transportation and are turned down to horizontal position when the tool shall be used.

Tractor tools are fastened to the tractor's tow hook which is a fixed point in the system. A mere adjustment of the working depth by raising or lowering the ground engaging wheels has the result that the angle of the tool in relation to the ground is changed. Since the front part of the tool which is attached to the tractor is secured to the tow hook, it is more or less only the rear part of the tool which is raised or lowered with the result that the angle of the tool to the ground is influenced. It is known to provide tractor towed tools with a hinged pull member, which allows parallel height adjustment. A hinged pull member cannot transmit weight from the tool which is coupled to the tractor to the tow hook of the tractor. Therefore it is necessary to provide additional ground engaging wheels or runners for supporting the front part of the tool coupled to the tractor. By a simultaneous adjustment of the front and rear ground engaging wheels, the working depth can be adjusted in parallel and the desired angle to the ground be maintained. Even if the parallel adjustment is achieved, the solution is unnecessarily complicated. During road transport, for example, the front ground engaging wheels have to be raised from ground or be provided with a turning device.

When the tractor towed tool is in operation and the resistance from the ground is incidentally increased, there is often need for a corresponding incidental reduction of the working depth in order to regain the pull of the tractor and prevent the driving wheels of the tractor to dig down into the ground. Although a parallel raising of the tractor tool such as disclosed in US-A-3759337 is better than merely raising in the rear edge of the tool, the working efficiency of the tool is unnecessarily reduced. The tractor pull often can be regained by slightly raising the front part of the tool which is coupled to the tractor, as the resistance from the ground is at its extreme just there, wherein the working result is influenced very little.

Tractor tools of known type where the working depth is hydraulically adjusted have a tendency to successively sink towards the ground. This is due to the fact that the valve which powers the ground engaging wheel actuator seldom is completely in its centre position. This is of minor importance when the tractor tool is in operation, since the operator easily can readjust the working depth. The tendency of the tool to sink down, however, may give rise to reduced security during road transportation. As far as known tools are concerned, one has tried to avoid this problem by providing mechanical locking devices. Such locking devices also give extra security in case of hose failure or other errors in the hydraulic system. The tool, however, will be troublesome to operate, since the operator must remember to set and to release, respectively, the locking device prior and after transport.

Further, it is a disadvantage of known towable tractor tools of the type which are folded up and brought together before road transport that the centre of gravity will lie high, wherein the tractor tool easily will be unstable. Further, the rear lamps of the tractor will be blocked, so that they will be difficult to see from vehicles which follow the tractor.

The objects of the invention is to provide a towable tractor tool such as disclosed in US-A-3759337 where the said drawbacks are eliminated.

The objects are achieved according to the invention through the features which are set force in the appended claims.

An embodiment of the invention will be described in the following with reference to the accompanying drawings, in which
- Fig. 1: shows, as viewed from above, a simplified harrow in working position;

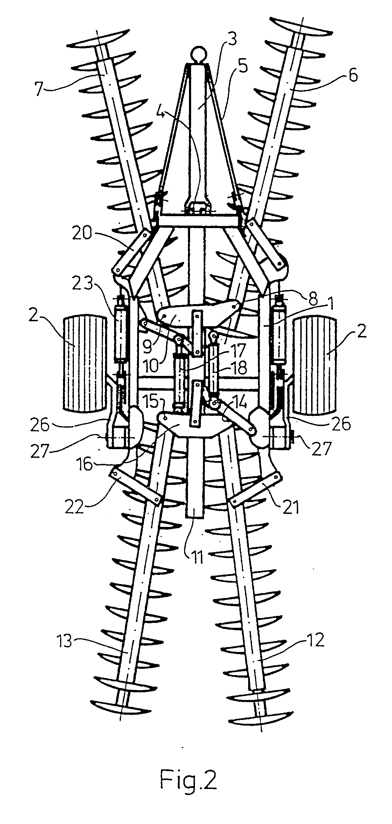

- Fig. 2: shows, as viewed from above, a simplified harrow in transport position;
- Fig. 3: is a side elevation of a simplified frame for a harrow in working position;
- Fig. 4: shows the same as in Fig. 3 but with reduced working height; and
- Fig. 5: is a side elevation of a simplified frame for a harrow in working position.

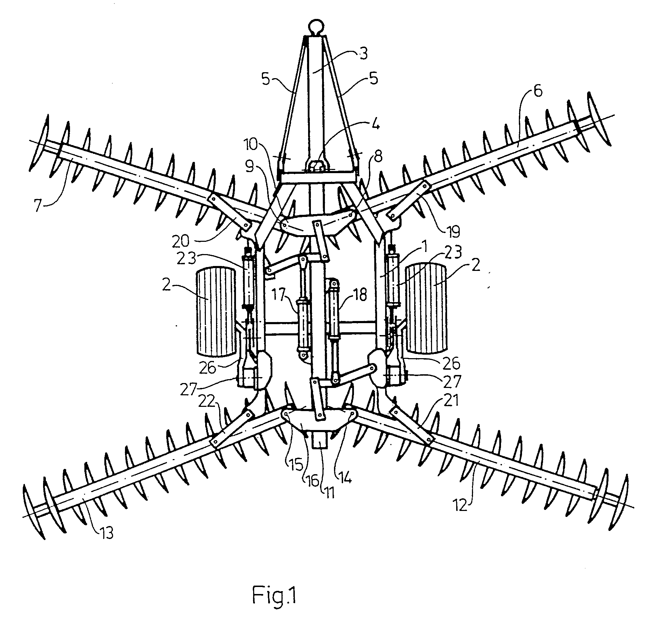

In Fig. 1, reference numeral 1 denotes a frame which is supported by ground engaging wheels 2. The frame 1 is provided to be towed by a tractor, which is not shown, via a pull member 3, which is pivotably fastened to the frame 2 through a hinge 4 and provided with bracers 5. Two front harrow sections 6, 7 are pivotably fastened to a first slide 10 through pivots 8, 9, said first slide 10 being provided to slide along a boom 11, which is fastened to the frame 1. Two rear harrow sections 12, 13 are pivotably fastened to a second slide 16 through pivots 14, 15, said second slide 16 also being provided to slide along the boom 11. A first hydraulic cylinder 17 is provided to move the slide 10 along the boom 11. A second hydraulic cylinder 18 is provided to move the slide 16 along the boom 11.

Hinged links 19, 20, 21, 22 are pivotably fastened to the frame 1 and to the harrow sections 6, 7, 12, 13, respectively, so that when the cylinders 17, 18 move the slides 10, 16 towards the centre of the boom 11, the harrow sections 6, 7, 12, 13 will adopt a position which is generally parallel with the boom 11 and with the driving direction of the harrow, as is shown i Fig. 1. Herein there is achieved a low and compact transport position. The angle of the harrow segments 6, 7, 12, 13 relative to the driving direction can easily be adjusted by means of the cylinders 17, 18 when the harrow is in operation.

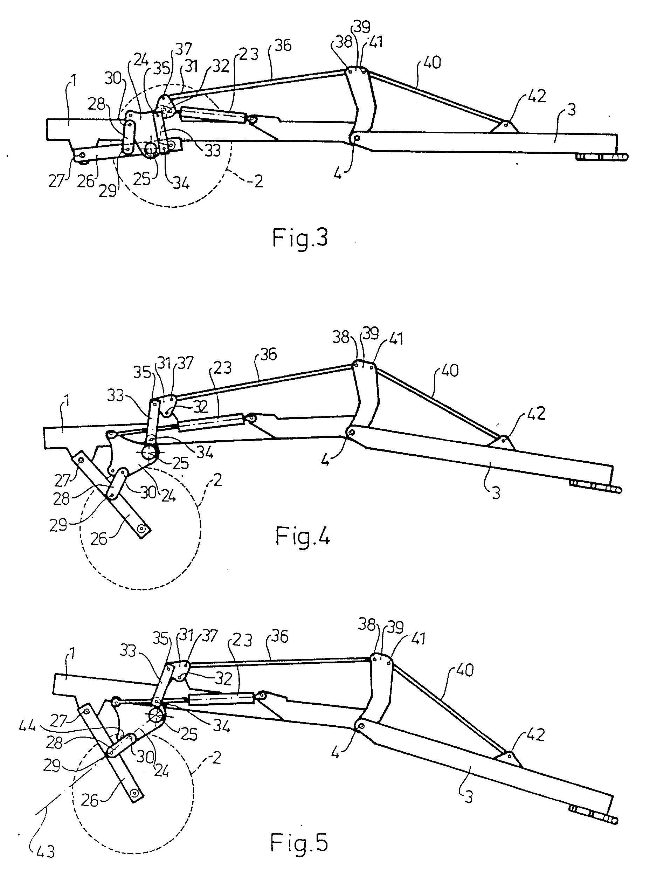

A pair of hydraulic cylinders 23 is provided to raise and to lower the frame 1 relative to the ground by displacing the ground engaging wheels 2. By means of a mechanism which will be described below with reference to Fig. 3, Fig. 4 and Fig. 5, the result is achieved that the harrow when being raised initially is raised most in the front edge. When the harrow is in operation, this implies a quick and efficient adaptation to available pull.

In Fig. 3, the harrow is shown at its deepest working depth, the ground engaging wheels 2 being completely lifted up under the frame 1 by means of the pair of cylinders 23 which are provided to turn a first plate 24 about a centre 25, which is fixed relative to the frame 1. The ground engaging wheels 2, which are shown through dashed lines, are provided to be turned about a journal which is fastened to one end of a lever 26, whose other end is pivotably fastened to the frame 1 and provided to be turned about an axle of rotation 27. The lever 26 is coupled to the plate 24 through a first link 28, which is pivotably fastened to the lever 26 in a pivot 29 and to the plate 24 in a pivot 30.

Further, the plate 24 is coupled to a second plate 31, which is fastened to the frame 1 and provided to be turned about a journal 32 by means of a second link 33, which is pivotably fastened to the plate 24 in a hinged joint 34 and to the plate 31 in a hinged joint 35. When the cylinder 23 turns the plate 24 about the centre 25, the link operates such that the lever 26 is turned about the axis of rotation 27, wherein the ground engaging wheel 2 is pressed towards the ground, raising the frame 1. At the same time, the link 33 works such that the plate 31 is turned about the journal 32. A first strut 36 in one end is fastened to the plate 31 in a hinged joint 37 and in the other end, in a hinged joint 38, fastened to a third plate 39. The plate 39 is pivotably fastened to the frame 1 in the pivot 4 and provided to be turned about said pivot by means of the strut 36. A second strut 40 connects the plate 39 with the pull member 3 therein that the strut 40 is pivotably fastened to the plate 39 in a hinged joint 41 and to the pull member 3 in a pivot 42. When the strut 36 turns the plate 39 about the pivot 4, the strut 40 functions such that the angle of the pull member 3 relative to the frame 1 is changed, and by the fact that the pull member 3 is fastened to a not shown tow hook, the angle of the frame 1 relative to the ground will be influenced. As the first plate 24 successively is turned about the journal 25, the turning movement of the pull member 3 about the pivot 4 is decreased, as the second link 33 with the pivot 34 approaches a dead point. The movement of the lever 26 at the same time is increasing as the first link 28 with the pivot 30 moves from a dead point. This implies that at first the pull member 3 is influenced most, but successively the lever 26 and the ground engaging wheel 2 is influenced by the turning movement of the plate 24. Therefore, the pull member 3, which is fastened in the tow hook of the tractor at the beginning raises the frame 1 in the front edge thereof, so that the angle of the frame 1 relative to the ground is influenced. The front segments 6, 7 of the harrow, see Fig. 1, will have their working depth reduced more than the rear harrow segments 12, 13.

In Fig. 4, the plate 24 is turned to the left by the cylinder 23. The link 28 at the same time has turned the lever 26 about the axis of rotation 27, so that the ground engaging wheel 2 has been lowered relative to the frame 1, wherein the harrow has been raised to a shallower working depth. At the same time, the plate 24 has turned the plate 31 via the link 33 and has changed the angle of the pull member 3 relative to the frame 1 via the strut 36, the plate 39, and the strut 40.

In Fig. 5, the frame 1 is shown in the transport position of the harrow. The pivot 30 has passed a straight line 43 between the centre 25 and the pivot 29. The link 28 therewith has passed a dead point. The ground engaging wheel 2 is locked in the shown position by the fact that the link 28 abuts a stop 44, which is fastened to the plate 24, so that further turning of the plate 24 is prevented. The ground engaging wheel 2 therewith is locked in the transport position even if the cylinder 23 would become powerless, wherein additional safety provisions are not required. The harrow is lowered therein that the plate 24 is turned in the opposite direction, i.e. to the right with reference to Fig. 5, by the cylinder 23.

It should be realized by a man skilled in the art that the stop 44 can be located such that it will abut the frame 1 instead for the link 28 when the harrow is in its transport position. The stop 24 also can be mounted on the frame 1 and be positioned such that it will prevent any further turning of the plate 24, when the pivot 30 has passed the line 43 during turning to the left.

## Claims

1. Towable tractor tool of the type which is supported by ground engaging wheels (2), runners or the like, wherein parts of the tractor tool is brought to transport position before road transport, and a pull member (3) is pivotably fastened to a frame (1) in a pivot (4) and provided to be turned about the pivot (4) when the tractor tool is raised from one working depth to another, **characterized** in that the pull member (3) is connected to a turnable, journalled first plate (24) via first and second struts (36, 40), second and third, turnably journalled plates (39, 31), and a link (33), said first plate (24) being turnable about a journal (25) by means of a hydraulic cylinder (23), and wherein the first plate (24) is further connected to a lever (26) via an other link (28) which is pivotably fastened to the lever (26) in a pivot (29) and to the plate (24) in a pivot (30), said lever (26) in one end thereof carrying a ground engaging wheel (2) and in the other end being turnably fastened to the frame (1), wherein a turning of said first plate (24) will cause a turning of said lever (26) and at the same time a turning of the pull member relative to the frame (1).

2. Towable tractor tool according to claim 1, **characterized** in that a stop (44) is provided to prevent further turning of the first plate (24), when one pivot (30) of said other link (28) has passed a dead point which lies on a line (43) which intersects the axis of rotation of the journal (25) and the axis of rotation of a second pivot (29) of said other link (28), wherein the tractor tool is maintained in transport position even if the said hydraulic cylinder would become powerless.

## Patentansprüche

1. Schleppbares Traktorgerät der Art, die von Laufrädern (2), Kufern oder ähnliches gestützt ist, wobei Teile vom Traktorgerät vor Transport auf dem Weg in Transportlage gebracht werden, und ein Zugmittel (3) an dem Rahmen (1) in einer Schwenkachse (4) drehbar verbunden und dafür bestimmt ist, um das Schwenkachse (4) gedreht zu werden, wenn der Traktor von einer Arbeitstiefe bis nächste erhöht wird, **dadurch gekennzeichnet**, dass das Zugmittel (3) mit einer drehbaren, gelagerten, ersten Platte (24) mittels ersten und zweiten Stützen (36, 40), mittels zweiten und dritten, drehbar gelagerten Platten (39, 31) und einem Gelenk (33) verbunden ist, wobei diese erste Platte (24) um einer Achse (25) mittels einem hydraulische Zylinder (23) drehbar ist und wobei die erste Platte (24) ausserdem mit einem Hebel mittelst einem anderen Gelenk (28) verbunden ist, das mit dem Hebel (26) in einer Schwenkachse (29) und mit der Platte (24) in einer Schwenkachse (30) drehbar verbunden ist, wobei dieser Hebel (26) in einem seiner Enden ein Laufrad (2) trägt och in dem anderen Ende mit dem Rahmen (1) drehbar befestigt ist, wobei eine Drehung dieser ersten Platte (24) eine Drehnung dieses Hebels (26) verursachen wird, und gleichzeitig eine Drehung des Zugmittels bezüglich des Rahmens (1).

2. Schleppbare Traktorgerät nach Anspruch 1, **dadurch gekennzeichnet**, dass ein Anschlag (44) vorgesehen ist um weitere Drehung dieser ersten Platte (24) zu verhindern, wenn eine Schwenkachse (30) dieses zweiten Gelenks (28) einen toten Punkt passiert hat, der auf eine Linie (43) liegt, die die Rotationsachse der Achse (25) und die Rotationsachse der zweiten Schwenkachse (29) dieses zweiten Gelenks (28) kreuzt, wobei das Traktorgerät in Transportlage bleibt, auch wenn dieser hydraulische Zylinder kraftlos werden sollte.

## Revendications

1. Outil remorquable par tracteur, de modèle supporté par des roues de contact au sol (2), des patins ou équivalent, de sorte que certaines parties de l'outil sont mises en position de transport avant la conduite sur route, tandis qu'un tirant pivotant (3) fixé à un cadre (1) par un pivot (4) peut tourner autour du pivot (4) lorsque l'outil tracté est soulevé d'une profondeur de travail à une autre, et ce, conformément aux caractéristiques suivantes: le tirant (3) est relié à une première plaque mobile pivotante (24) par deux étais premier et second (36, 40), les plaques mobiles pivotantes seconde et troisième (39, 31) et une barre de liaison (33), ladite première plaque (24) étant apte à pivoter autour d'un tourillon (25) au moyen d'un vérin hydraulique (23); en outre la première plaque (24) est reliée à un levier (26) au moyen d'une seconde barre de liaison mobile (28) fixée au levier (26) par un pivot (29) et à la plaque (24) par un pivot (30); ledit levier (26) supporte à une extrémité une roue (2) de contact au sol et, par l'autre extrémité, est fixé au cadre (1) au moyen d'une fixation pivotant, de sorte que la rotation de ladite première plaque (24) met en mouvement ledit levier (26) tout en faisant tourner le tirant par rapport au cadre (1).

2. Outil remorquable par tracteur conforme à la revendication 1, et répondant aux charactéristiques suivantes: une butée (44) empêche la première plaque (24) de tourner davantage lorsque le pivot (30) de ladite barre de liaison (28) a franchi un point mort situé sur la ligne d'intersection (43) entre l'axe de rotation du tourillon (25) et l'axe de rotation du second pivot (29) de ladite barre de liaison (28), de sorte que l'accessoire tracté est maintenu en position de transport même si le vérin hydraulique est inopérant.
